# EUROPEAN PATENT APPLICATION

(11) **EP 0 881 128 A2**
(43) Date of publication of application: **02.12.1998**
(21) Application number: 98304235.9
(22) Date of filing: 28.05.1998
(51) Int. Cl.: B60R 13/10, B44C 1/17, B41M 5/035

(54) **Manufacture of signs using sublimable dyes**

(30) Priority: 28.05.1997 GB 9710977
(71) Applicant: Trip Industries Holding B.V., 2160 AH Lisse (NL)
(72) Inventor: Lythgoe, Alan Lennox, Sandgate, Kent, CT20 3DE (GB); van Heijningen, Dirk Jan, 2406 XS Alphen aan de Rijn (NL)
(74) Representative: BROOKES & MARTIN

(57) **Abstract**

A method of manufacturing a vehicle registration plate or similar sign is described in which indicia comprising at least one sublimable disperse dye are transferred from a carrier sheet under the influence of heat and pressure to a plastics material, which is substantive to the sublimable dye, so that the dye is permanently absorbed by the plastics substrate. Preferably, the substrate comprises a retroreflective plastics sheet or is a transparent plastics sheet laminated to a retroreflective sheet.

## Description

This invention relates to the productions of signs and graphics using transfers having sublimable dyestuffs. At present, there are a variety of systems employed for manufacture of signs and decorative and informative graphics.

The method of choice depends often on cost and the number of multiple images to be produced. For example, a one-off type sign produced at a relatively low cost might have been hand-painted or made up of a multiple of images produced from the application of stickers or transfers. More complex or precise signs require more handwork and, therefore, increase the costs. For signs produced in large quantities, the images may be accomplished by screen process printing or in very large quantities by other printing processes, including offset lithography or flexography.

Where the graphics used are painted, printed or applied by transfer, it is often necessary to consider protecting the image against wear and tear or degradation. These problems arise principally because of reduction in adhesion of the inks to the substrate, poor light fastness in natural sunlight, and poor mechanical resistance due to scratching or impact and lack of security if the graphics can be removed, defaced, or replaced.

One way of protecting signs has been to encapsulate the graphics between transparent plastic layers, e.g. by lamination between transparent plastic sheets.

A number of the considerations mentioned above occur in the manufacture of vehicle signs of the kind used for displaying the licence number of the vehicle. In the manufacture of vehicle signs, the make up of the sign may be quite complicated and costly and, of course, the sign itself is a customised product. It is advantageous for the background of the licence number to be reflective and the indicia are commonly adhered to a reflective background. The reflective background may be supplied as an unsupported roll which may be adhesive coated on one or both sides, and protected for convenience and storage with siliconised paper or plastic film.

The letters or numbers forming the licence registration are normally transfers which are either applied to the reflective material or, alternatively, to a protective transparent layer to which the reflective material will be laminated. The face of the sign is protected by laminating the assembly onto a thick transparent acrylic sheet and the whole may be mounted on an aluminium plate. Such a sign will last for several years without deterioration since there is protection for the indicia and the reflective material by the acrylic backing sheet, and the transparent protective film.

It is an object of the present invention to produce signs of the kind referred to above, having similar degrees of resistance to wear and weathering, by using a less costly procedure and also to enable a one-off design which may be complex or decorative in design to be produced at low cost.

According to one aspect of the present invention there is provided a method of forming a sign or design on a substrate wherein indicia comprising at least one sublimable dye are transferred from a carrier sheet under the influence of heat and pressure to said substrate, and wherein said substrate comprises a plastics material which is substantive towards said sublimable dye, whereby said dye is permanently fixed to said substrate, and then laminating a transparent protective plastics sheet over the transferred indicia. The invention is particularly applicable to the manufacture of vehicle licence plates and similar identification signs but not exclusively so.

The invention enables the sign to be formed directly upon a component of the vehicle such as the vehicle bumper, or a part of it which has been pre-treated or preformed to provide an area of reflective material.

By virtue of the present invention, the complicated and costly procedure of multiple assemblies involving protective materials which have to be discarded, the whole procedure can be reduced to the single heat transfer applied to the surface of a plate which can be an integral part of the vehicle.

The dyes used in the present invention should be volatile at a convenient temperature below or near the melting point of the receptor substrate and are, therefore, of relatively low molecular weight and free from water solubilising groups, which can restrict or prevent vaporisation. The class of dyes preferred are generally of the disperse type and these can be made up in various compositions from which the dye can be volatilised onto and into the surface of the receptor materials. The degree of penetration of the dye into the surface of the receptor varies according to the properties of the dye itself, to the conditions of the transfer and the receptivity of the substrate. These dyes are generally substantive to artificial plastic, especially polyamides, e.g. nylon, polyesters, polycarbonates and polyimides. They are generally not substantive towards polyethylene and polypropylene.

Penetration of the dyes into the plastic surface is greatest when the dyes employed volatilise at the highest temperature consistent with the melting point of the plastic surface. The time of contact with the surface at the transfer temperature is also an important consideration. Since lateral diffusion is possible with lengthening transfer times, there is a limit to contact time of the dye carrier with the plastic before the edges of lines lose their sharpness. The selected dyes should have a particle size of less than 5 microns and a high purity.

Suitable sublimable dyes are available from a number of suppliers, e.g. from Holliday Dyes & Chemical Ltd., Leeds Road, Huddersfield, as disperse dyestuffs under the trade mark "SUBLAPRINT". Preferred dyes are those which transfer at a temperature within the range of about 160°C to 210°C. Such temperatures can be withstood by polyester receptor sheets.

A transfer is prepared for transferring the indicia in the selected sublimable dyes to the vinyl receptor substrate. For this purpose, the dyes are dispersed in a suitable liquid phase and printed onto a temporary support sheet. The support sheet may be paper or a polyolefin material or a combination of the two, e.g. a paper coated with a polyethylene film. The temporary support is preferably relatively thin so that it is able to conform to the receptor surface without deformation of the print during transfer. The paper should be relatively impermeable to the volatilised dye, so that the maximum amount of dyestuff is directed toward the substrate. The paper should preferably give good release of the dye vapour and have reasonable heat resistance and, therefore, coated papers are generally preferred. A polyethylene laminated paper gives a satisfactory release surface. Alternatively, papers coated with a release agent, e.g. waxed or siliconised papers may be used.

Transfer of the indicia to the receptor surface is carried out by bringing the transfer into close contact with the receptor surface and applying heat, e.g. through a flexible silicon rubber blanket.

The printing process employed for printing the temporary support with the indicia may be any of the conventional methods, such as offset lithography, gravure flexographic or screen printing. However, non-contact printing methods such as inkjet, laser toner and thermal imaging may be used and allow one-off or very short run designs to be produced cheaply and immediately on the site where the sign is to be produced. In accordance with conventional practice, the indicia are printed in mirror image in order that the final lettering is the right way round.

The ink formulated for the purposes of the present invention should meet the following general requirements.
1. The dyestuff should have a low particle size so that the transfer of colour is even without high spots of colour from large particles or agglomerates. Preferably, the dyes should have a particle size of less than about 5 microns, preferably in the range of 1 to 5 microns.
2. The dyes should not be solubilised by the solvents used to produce the ink, so that no crystals are thereby formed by the dyes coming out of solution.
3. The dyes should have low substantiveness to the medium of the ink, thereby allowing as much freedom for evaporation of the dyes as possible.

In general, the high pigmentation of offset litho inks enable oil-based media to be used satisfactorily as the continuous phase of the inks and in flexographic and screen process inks, a variety of polymers give good results, including vinyl pyrrolidones, vinyl acetate and vinyl alcohol copolymers, acetates, butyrates and natural resins derived from rosin and rosin esters.

In water-based ink formulations, gelatine, polyvinyl alcohols, vinyl pyrrolidones, acrylic emulsions and rosin and rosin ester emulsions can be used as the fluid media.

In four colour high-tone and multi-colour printing, it is important to select the dyes to be compatible with and to have as little difference in vapour pressure, affinity to the substrate and the rates at which they volatilise in order that densities of colour remain balanced.

In general, dyes can be classified according to their transfer rate to the chosen substrate. Different colour dyes can then be chosen to give the best colour balance at a particular set of transfer conditions. Since there is no black disperse dye, the colour has to be simulated by a mixture of red, yellow and blue dyes and it is particularly important in this kind of situation that the dyes used are compatible and of the transfer class.

Depending on the transfer conditions, the dyes penetrate more or less into the plastic or coated substrate. The amount of penetration controls the fastness of the dyes to light and general resistance to weathering. Levels of light fastness up to Blue Wool scale 6 or 7 can be achieved with the dyes on the surface of the plastic, but this level can be further improved by protecting the dye with coatings or laminates which include UV absorbers.

Sufficient weather and light fastness can be achieved by this method to ensure that vehicle licence plates, for example, can have a life of several years.

With vehicle number plates, for example, the uniqueness of the number means that the number has to be reproduced normally only twice, once for the front and once for the rear of the vehicle. In the traditional printing processes, this has meant that it is not possible to preprint the number economically, and so transfers of individual letters and numbers have provided the means for the licence plates to be assembled immediately prior to the vehicle being delivered.

With the advent of digital printing, it is now possible to do away with the problems of stocking, selecting and assembling the transfers and for single and multiple assemblies to be produced directly from a computer as required. In this case, the printing method may be any of the processes readily controlled by computer, e.g. jet ink printing, laser printing, double jet printing and thermal transfer.

Since the print can be made on the exterior surface of the licence plate, all the normal layers required to give reflectivity and background colour may be built into the plate in the most effective manner, prior to the printing operation, which may then be carried out in relatively ill-equipped garages. Previously, the garage would be required to assembly a number of components, for example:
1) a reflective tape,
2) transfers to be applied onto the tape,
3) double-sided adhesive strip to adhere the reflective material with its transfer numbers and letters to a protective transparent plastic plate,
4) an adhesive to adhere the assembly to an opaque rigid backing sheet, and
5) drilling and bolting of the assembly to fix it to the vehicle.

With the method of the invention, it is possible to prepare the complete assembly integrally onto the bumper of the vehicle, for example, onto an area where reflective material is incorporated as a moulded in foil. The licence number prepared from a computer print-out using sublimation inks would then be put onto a transfer in a jig and the numbers transferred by heat.

In such an assembly, the indicia cannot be easily interfered with which should therefore improve security. Although easy to produce using the right application equipment, it is not easy for a number to be removed and changed.

Naturally, the plates can be made separately for attachment to vehicles in a similar way to current practice and, in this procedure, there will be benefits in easy production of the transfers and transfer of the numbers and letters to a substrate.

For a fully description of a conventional method of producing vehicle licence plates using transfers, reference may be made to US Patent No. 5,085,918 and 5,378,575. The methods described in these Patents can be modified by substituting a transfer in which the lettering is produced by sublimable dyes.

While it is possible to print the whole number from a computer source onto a temporary carrier sheet to form the transfer, it may be more convenient to prepare individual letters and numbers for assembly only in the current practice. These could be supplied in quantities or made on site. Depending on the quantities required, it may be more convenient to use conventional printing methods such as screen process printing.

Similarly, the production as above of fully assembled reflective plates can be used for the preparation of street names, and a large variety of informative and decorative signs, whether using reflective materials or coloured or clear backgrounds which can be surface treated to prevent vandalising.

In the selection of sublimable dyes, where more than one are used in the production of an indicia, the dyes are preferably selected to have the same or similar volatilisation temperature so that they all transfer at the same temperature and contact time.

Examples of uses of signs manufactured in accordance with the invention are illustrated in the drawings, in which:
Figure 1 is a section through a sign, and
Figure 2 is a perspective view of a vehicle bumper (fender) drawn on a smaller scale to the sign of Figure 1.

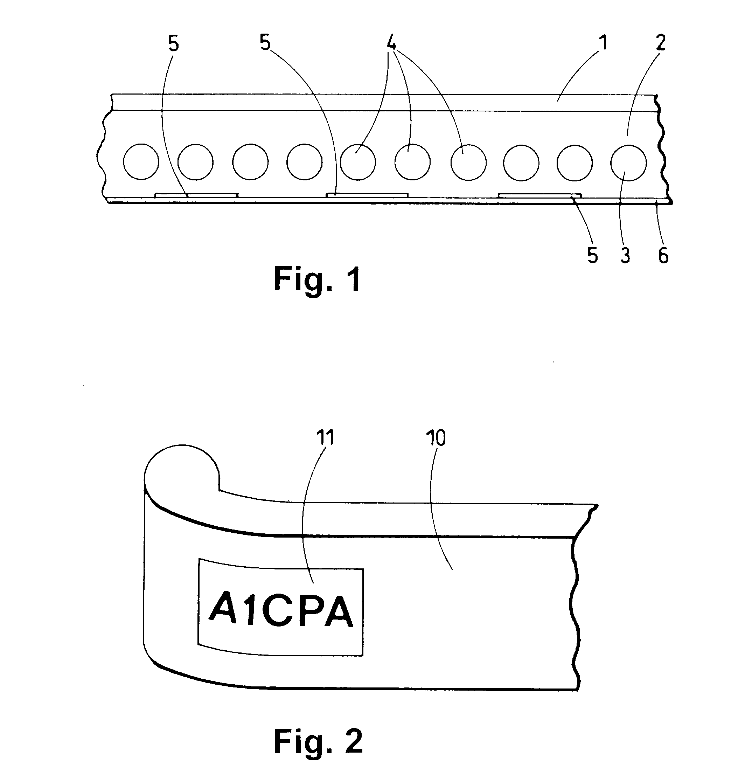

Referring to Figure 1, the sign comprises a base layer 1, e.g. of aluminium sheet or relatively rigid plastics sheet, e.g. pvc, polyester or polymethyl methacrylate. Laminated to the base layer 1 is a layer of transparent plastic 2, e.g. of polyester or polyalkylacrylate or methacrylate. A layer of glass microbeads is supported in the spacing layer 2. The microbeads are half coated with a reflective specular layer 4, e.g. of aluminium, which leaves the sides of the beads opposite the base layer uncoated. Printed on the spacing layer 2 are vehicle registration letters or numerals 5 of sublimable dyestuff which has been absorbed into the surface of the layer 2. A final protective layer 6 is laminated over the letters and numerals 5.

Figure 2 shows part of a bumper comprising a plastics moulding 10, e.g. of polypropylene or pvc. Laminated as a panel onto the bumper 10 is a plate 11. The plate 11 has a structure similar to the sign shown in Figure 1 and the base plate 1 is adhesively or heat bonded to the material of the bumper.

The following Examples are given to illustrate the invention and the manner in which it may be carried into effect.

### Example 1

A car bumper of polypropylene was prepared by heat or adhesive laminating onto the front surface a reflective sheet material comprising a layer of retroreflective beads, supported on a polyester or acrylic plastic sheet. Suitable retroreflective material is described in US Patent No. 4,664,966 and comprises a layer of glass microbeads having a specular coating on part of the beads supported in a transparent spacing layer. Where the reflective sheet material is adhesively laminated to the surface of the bumper, an acrylate-based adhesive may be used. The numbers and letters making up the vehicle registration were printed in a disperse dye from a water-based ink onto a paper carrier sheet, and were cut into individual units by placing onto a slightly tacky paper background. This assembly was then registered in a jig onto the reflective surface of the polyester sheet and then heated to about 200°C whilst the assembly is kept in close contact with the polyester sheet. The dye was sublimed into the surface of the polyester, leaving the number irremovably embedded in the face of the laminated bumper. Since the dye sublimes to a depth of several microns, the design cannot be removed other than by mechanically removing the top surface of the bumper. Without replacing the entire bumper, the number once transferred cannot be removed and replaced, thereby ensuring a greater degree of security than available with current methods.

### Example 2

A preformed reflective number plate blank was used in this Example consisting of a rigid backing of aluminium having a layer of retroreflective microbeads on a polyester sheet heat or adhesively laminated to the aluminium sheet.

A transfer paper was prepared by printing indicia in sublimation dyes in a water-based ink onto a paper support, using an inkjet printer. The indicia were transferred to the retroreflective surface by placing the transfer paper in intimate contact and using a silicone rubber plate at a temperature of 190°C to cause the dyes to sublime and transfer into the retroreflective layer. A transparent protective sheet can be laminated over the transferred indicia. Suitable transparent protective sheets which have amounts of stretch or elongation are disclosed in US Patent No. 4,767,659 and include polyester and ethylene acrylic acid.

Example 2 can be modified by including a UV inhibitor in a layer absorbed on the paper, the UV inhibitor being released from the paper as the sublimation proceeds. The paper carrier sheet may be coated with a UV inhibitor and then printed with the ink containing the sublimation dyes.

## Claims

1. A method of forming a sign or design on a substrate wherein indicia comprising at least one sublimable disperse dye are transferred from a carrier sheet under the influence of heat to said substrate and wherein said substrate comprises a plastics material which is substantive towards said sublimable dye, whereby said dye is permanently affixed to said substrate and then laminating a transparent protective plastics sheet over the transferred indicia.

2. A method as claimed in claim 1 wherein the substrate comprises a laminated sheet material for a vehicle registration plate or a road sign.

3. A method as claimed in claim 1 wherein the substrate comprises a base sheet giving mechanical strength and a reflective sheet material bonded to the base sheet, the indicia being absorbed onto the reflective sheet material or onto a transparent sheet material bonded to and overlying the reflective material.

4. A method according to claim 1 wherein the substrate comprises a plastics component of a vehicle.

5. A method according to claim 4 wherein the plastics component is a vehicle bumper (fender).

6. A sign which comprises a plastics sheet material having indicia formed from a sublimable dye absorbed by said sheet material and having a transparent protective plastsics sheet over the indicia and laminated to the plastsics sheet material.

7. A vehicle plastics body component having indicia formed from a sublimable dye absorbed by said component.

8. A method of forming a vehicle registration plate which comprises printing the requisite number and/or letter combination onto one or more carrier sheets in a disperse, sublimable dye, said carrier sheets having a surface which is non-substantive towards the dye, applying the surface of the carrier sheet to a blank licence plate so that the sublimable dye surface is in intimate contact with the surface of the blank licence plate and heating the carrier sheet to transfer the sublimable dye to the licence plate, the surface of the licence plate comprising a polyester and said disperse dye comprising particles having a particle size within the range of 1 to 5 microns.
